# EUROPÄISCHE PATENTSCHRIFT

(11) **EP 3 568 611 B1**
(45) Veröffentlichungstag und Bekanntmachung des Hinweises auf die Patenterteilung: **03.03.2021**
(21) Anmeldenummer: 17826420.6
(22) Anmeldetag: 06.12.2017
(51) Int. Cl.: F16H 1/22, F16H 57/04

(54) **ANTRIEB, AUFWEISEND VON ELEKTROMOTOREN ANGETRIEBENES SUMMIERGETRIEBE UND EIN VON DIESEM ANGETRIEBENES GETRIEBE**
DRIVE, HAVING A COMBINING TRANSMISSION DRIVEN BY ELECTRIC MOTORS AND A TRANSMISSION DRIVEN BY SAME
ENTRAÎNEMENT, COMPRENANT UNE BOÎTE TOTALISATRICE ENTRAÎNÉE PAR DES MOTEURS ÉLECTRIQUES ET UNE BOÎTE DE VITESSES ENTRAÎNÉE PAR CELUI-CI

(30) Priorität: 16.01.2017 DE 102017000304
(43) Veröffentlichungstag der Anmeldung: 20.11.2019
(73) Patentinhaber: SEW-EURODRIVE GmbH & Co. KG, 76646 Bruchsal (DE)
(72) Erfinder: SCHÜTTERLE, Ingo, 76646 Bruchsal (DE); KOKER, Torsten, 76297 Stutensee (DE)
(86) Internationale Anmeldenummer: PCT/EP2017/025360
(87) Internationale Veröffentlichungsnummer: WO 2018/130264

(56) Entgegenhaltungen:
- DE-A1- 4 402 337
- US-A1- 2007 169 583
- US-A1- 2013 257 198

## Beschreibung

Die Erfindung betrifft einen Antrieb, aufweisend ein von Elektromotoren angetriebenes Summiergetriebe und ein von diesem angetriebenen Getriebe.

Aus der US 2013/257198 A1 ist als nächstliegender Stand der Technik ein Summiergetriebe bekannt, bei welchem das Drehmoment von vier Motoren auf ein Zentralrad übertragbar und somit summierbar ist.

Aus der DE 44 02 337 A1 ist ein elektromotorischer Antrieb bekannt.

Aus der US 2007/169583 A1 ist eine Fahrzeuggetriebeanordnung bekannt.

Der Erfindung liegt daher die Aufgabe zugrunde, einen Antrieb weiterzubilden, wobei ein hohes Drehmoment erzeugbar sein soll.

Erfindungsgemäß wird die Aufgabe bei dem Antrieb nach den in Anspruch 1 angegebenen Merkmalen gelöst.

Wichtige Merkmale der Erfindung bei dem Antrieb sind, dass der Antrieb ein von Elektromotoren angetriebenes Summiergetriebe und ein von diesem angetriebenen Getriebe aufweist,
wobei im Innenraum des Summiergetriebes ein niedrigeres Ölniveau als im Innenraum des Getriebes vorhanden ist, insbesondere bei Betrieb des Antriebs.

Von Vorteil ist dabei, dass das Summiergetriebe einen niedrigen Ölstand aufweist und somit geringe Plantschverluste.

Bei einer vorteilhaften Ausgestaltung ist zwischen dem Innenraum des Summiergetriebes und dem Innenraum des Getriebes eine Spaltdichtung angeordnet,
insbesondere welche einen derartig eng dimensionierten Spalt aufweist, dass bei Betrieb des Antriebs im Innenraum des Summiergetriebes ein niedrigeres Ölniveau als im Innenraum des Getriebes vorhanden ist. Von Vorteil ist dabei, dass die Spaltdichtung geringe Reibwärme bei Betrieb erzeugt und zudem verschleißfrei und somit langlebig ist. Außerdem ist die Spaltdichtung nicht absolut dicht und wird somit von Öl durchströmt, so dass vom Innenraum des Getriebes zum Innenraum des Schmieröls Öl durchleitbar ist. Auf diese Weise ist das Summiergetriebe mit Öl beaufschlagbar. Allerdings fließt der Ölstrom nur entsprechend der Spaltbreite. Zusammen mit einer gegebenenfalls vorhandenen Schmierstoffzufuhr 5 wird dem Summiergetriebe nur so viel Öl zugeführt wie zur Schmierung und Kühlung unbedingt erforderlich ist und wie durch die Förderwirkung der Verzahnteile wieder abgeführt werden kann. Somit stellt sich ein niedriger Ölstand im Summiergetriebe ein.

Bei einer vorteilhaften Ausgestaltung weist das Summiergetriebe ein Zentralrad und Verzahnungsteile auf, deren Verzahnung mit der Verzahnung des Zentralrades im Eingriff sind. Von Vorteil ist dabei, dass ein hohes Drehmoment übertragbar ist, da die von den Elektromotoren erzeugten Drehmomente zusammenführbar sind.

Bei einer vorteilhaften Ausgestaltung weist das Summiergetriebe eine nach oben offene Kapselung auf, welche zu dem von den Verzahnungsteilen und dem Zentralrad bei deren Drehbewegung überdeckten Raumbereich einen gleichmäßigen Abstand aufweist. Von Vorteil ist dabei, dass ein niedriger Ölstand bei Betrieb dadurch erreichbar ist, dass die rotierenden Verzahnteile das Öl nach oben aus der Kapselung heraus fördern, wobei die oberhalb des Ölstandes angeordneten Verzahnungsteile ausreichend geschmiert werden.

Bei einer vorteilhaften Ausgestaltung sind die Gehäuse der Elektromotoren mit einem Motoradapterflansch, insbesondere mit einem aus Metall gefertigten Motoradapterflansch, lösbar verbunden,
- wobei die Kapselung einstückig mit dem Motoradapterflansch ausgeformt ist
- oder wobei die Kapselung als separates Teil, insbesondere zum Motoradapterflansch separates Teil, ausgeführt ist, insbesondere wobei die Kapselung aus einem anderen Material, insbesondere aus Kunststoff, als der Motoradapterflansch gefertigt ist.

Von Vorteil ist dabei, dass die Kapselung nahe an den Verzahnungsteilen und dem Zentralrad anordenbar ist. Somit ist ein geringes Volumen von der Kapselung eingeschlossen und die Plantschverluste gering.

Bei einer vorteilhaften Ausgestaltung läuft von den Verzahnungsteilen und/oder von dem Zentralrad gefördertes, nach oben aus der Kapselung austretendes Öl an einer Überlaufkante der Kapselung oberhalb des im Innenraum des Getriebes vorhandenen Ölniveaus aus in einen Raumbereich, der in den Innenraum des Getriebes mündet,
insbesondere so, dass das Öl dem Innenraum des Getriebes zugeführt wird. Von Vorteil ist dabei, dass möglichst wenig Öl im Summiergetriebe gehalten wird und somit die Plantschverluste und dergleichen geringgehalten werden.

Bei einer vorteilhaften Ausgestaltung wird von den Verzahnungsteilen und/oder von dem Zentralrad gefördertes, nach oben aus der Kapselung herausspritzendes Öl von einer Fangrippe direkt aufgefangen oder dieser von einer Innenwandung des Motoradapterflansches zugeleitet,
wobei von der Fangrippe abtropfendes Öl, insbesondere mittels eines Ölableitblechs, oberhalb des im Innenraum des Getriebes vorhandenen Ölniveaus in einen Raumbereich geleitet wird, der in den Innenraum des Getriebes mündet,
insbesondere so, dass das Öl dem Innenraum des Getriebes zugeführt wird. Von Vorteil ist dabei, dass ein effektives Auffangen und Abtransportieren ermöglicht ist.

Bei einer vorteilhaften Ausgestaltung ist das jeweilige Verzahnungsteil drehfest mit der jeweiligen Rotorwelle eines jeweiligen Elektromotors verbunden. Von Vorteil ist dabei, dass die erzeugten Drehmomente über das Zentralrad zusammenführbar sind.

Bei einer vorteilhaften Ausgestaltung ist das Zentralrad mit einer Welle drehfest verbunden, welche mittels in einem Gehäuseteil aufgenommenen Lagern drehbar gelagert ist,
wobei das Gehäuseteil auf der von den Elektromotoren abgewandten Seite des Motoradapterflansches mit dem Motoradapterflansch verbunden ist,
wobei ein eintreibendes Verzahnungsteil des Getriebes drehfest mit der Welle verbunden ist,
wobei die Welle zum Gehäuseteil hin mittels der Spaltdichtung, insbesondere mittels der Spaltdichtung und einer Dichtscheibe abgedichtet ist. Von Vorteil ist dabei, dass das Summiergetriebe die Drehmomente der Motoren zusammenführt und Öl zur Schmierung der Verzahnungsteile aus dem Getriebe zuführbar ist, wenn auch in durch die Spaltdichtung beschränktem Maße.

Bei einer vorteilhaften Ausgestaltung ist das Gehäuseteil für das Getriebe gehäusebildend. Von Vorteil ist dabei, dass der Motoradapterflansch axial zwischen dem Gehäuseteil und den Motoren angeordnet ist

Bei einer vorteilhaften Ausgestaltung ist dem Summiergetriebe zusätzlich Öl über eine Ölleitung zuführbar, insbesondere wobei der Förderstrom mittels einer steuerbaren Ölpumpe oder mittels einer anderen Ölflusssteuereinheit abhängig von der Drehzahl des Zentralrads gesteuert wird. Von Vorteil ist dabei, dass bei Betrieb der Ölstand im Summiergetriebe unabhängig von der Drehzahl konstant haltbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

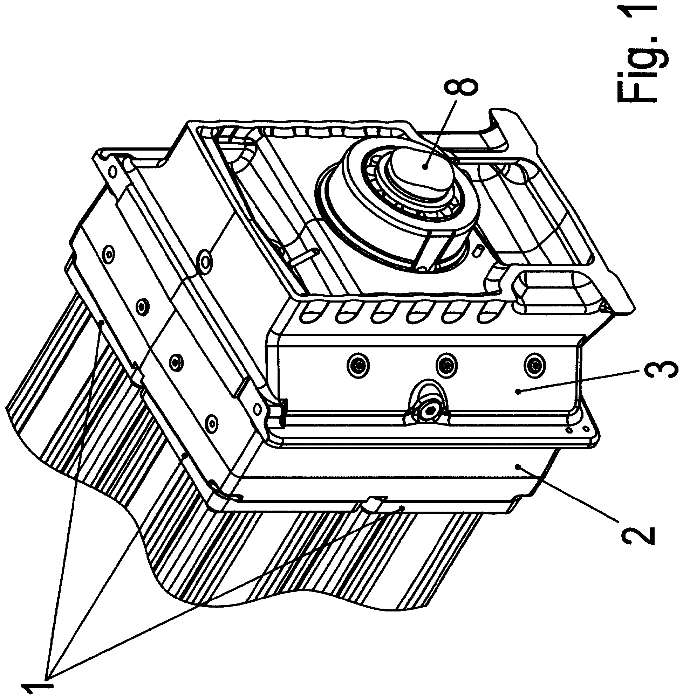

In der Figur 1 ist ein Summiergetriebe mit antreibenden Elektromotoren 1 eines erfindungsgemäßen Antriebs in Schrägansicht gezeigt, wobei der Antrieb nicht nur das von den Elektromotoren angetriebene Summiergetriebe, sondern auch ein vom Summiergetriebe angetriebenes Getriebe aufweist.

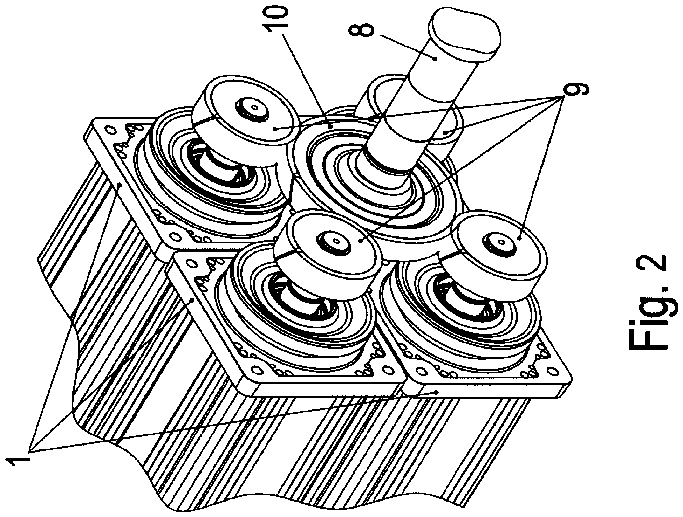

In der Figur 2 ist eine Schrägansicht auf das geöffnete Summiergetriebe gezeigt.

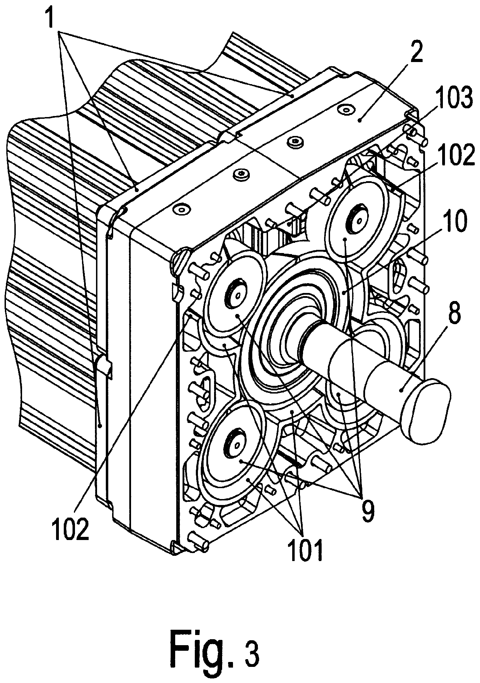

In der Figur 3 ist das Summiergetriebe geöffnet und mit gehäusebildend umgebendem Motoradapterflansch 2 und Kapselung 101 gezeigt, wobei ein Trennblech 4 entfernt ist.

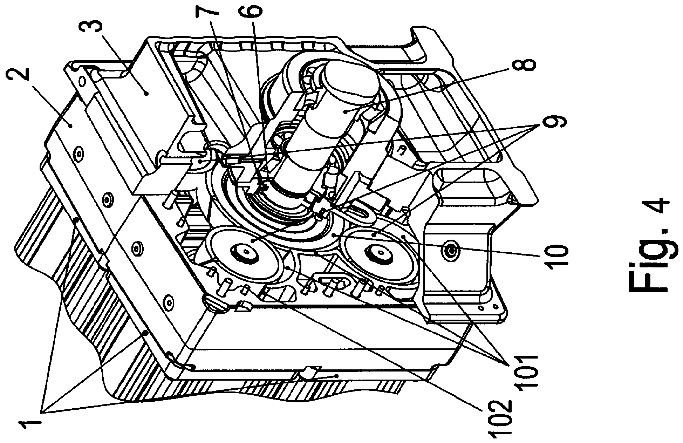

In der Figur 4 ist das Summiergetriebe angeschnitten gezeigt, wobei das Trennblech 4 wiederum entfernt ist.

In der Figur 5 ist das Summiergetriebe angeschnitten gezeigt, wobei das Trennblech 4 nicht entfernt ist.

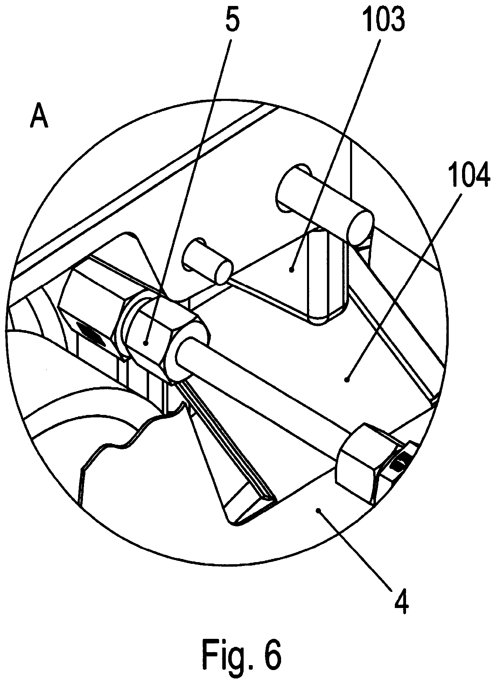

In der Figur 6 ist die Schmierstoffzufuhr ans Getriebe gezeigt.

In der Figur 7 ist ein vergrößerter Ausschnitt aus Figur 5 gezeigt.

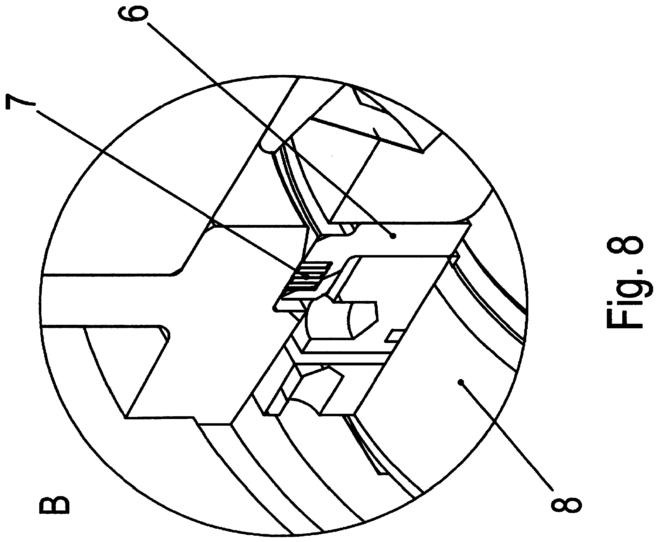

In der Figur 8 ist die zwischen Getriebe und Summiergetriebe bestehende Dichtung, aufweisend Dichtscheibe 6 und Spaltdichtung 7, dargestellt.

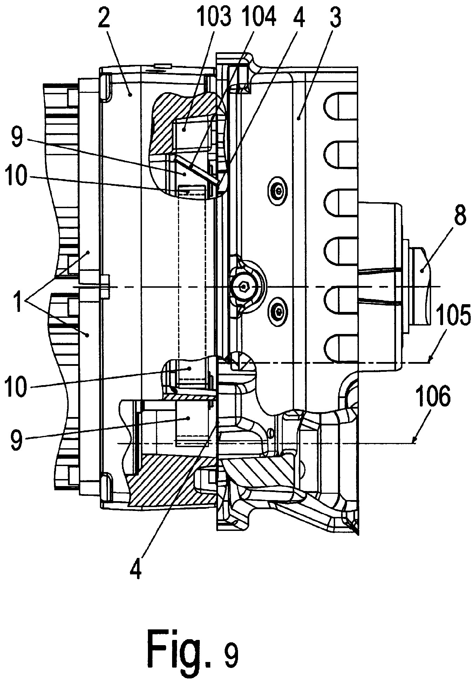

In der Figur 9 ist das Ölniveau 105, insbesondere der Ölpegel, des Getriebes und das Ölniveau 106, insbesondere der Ölpegel, des Summiergetriebes in einer Seitenansicht des Antriebs dargestellt.

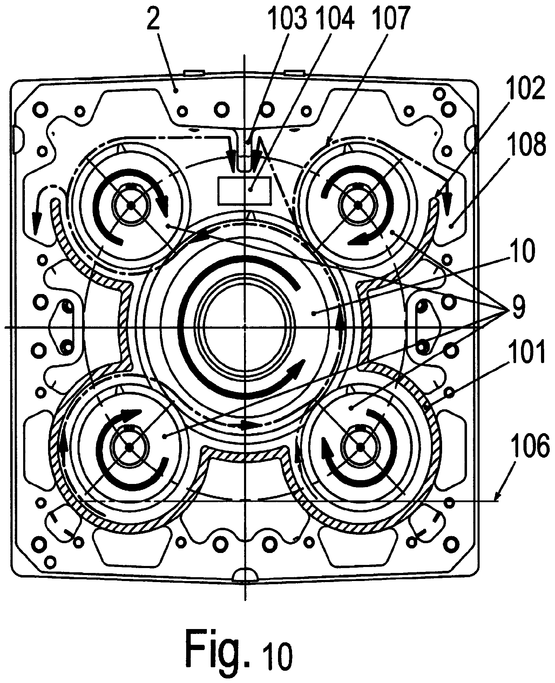

In der Figur 10 ist eine Schnittansicht des Summiergetriebes dargestellt.

Wie in den Figuren gezeigt, weisen die Elektromotoren jeweils eine Rotorwelle auf, mit denen jeweils ein Verzahnungsteil 9, insbesondere Antriebsritzel, drehfest verbunden ist.

Die Verzahnungen der Verzahnungsteile 9 sind jeweils mit der Verzahnung eines Zentralrads 10, insbesondere Sonnenrad, im Eingriff. Auf diese Weise wird die mit dem Zentralrad 10 drehfest verbundene Welle 8 mit den von den Elektromotoren 1 erzeugten Drehmoment zusammen beaufschlagt.

Die Gehäuse der Elektromotoren 1 sind mit einem Motoradapterflansch 2 verbunden, so dass das als Kühlmittel die Gehäuse der Elektromotoren 1 durchströmende Öl im Motorflansch 2 zusammengeführt wird und mittels einer als Schmierstoffzufuhr 5 fungierenden Ölleitung dem Innenraum des vom Summiergetriebe angetriebenen Getriebes zugeführt wird.

Hierbei fungiert die Welle 8 als eintreibende Welle des Getriebes, welches ein- oder mehrstufig ausführbar ist.

Somit ist das in den Motoren 1 als Kühlmittel fungierende Öl als Schmiermittel im Getriebe verwendet. Aus dem Innenraum des Getriebes wird das Öl herausgeleitet und von einem Ölfilter gefiltert. Somit wird auch Wärme vom Getriebe herausgeleitet.

Das vom Filter gefilterte Öl wird von einer Pumpe durch die im Gehäuse der Elektromotoren 1 angeordneten Kühlkanäle gefördert, so dass das Öl einen Kühlkreislauf durchläuft.

Der Motoradapterflansch 2 umgibt das Summiergetriebe in Umfangsrichtung und ist auf seiner von den Motoren 1 abgewandten Seite mit einem Gehäuseteil 3 verbunden, welches Lager zur Lagerung der Welle 8 aufnimmt.

Die Lager der Welle 8 sind vom Öl des Innenraums des Getriebes her geschmiert.

Der Innenraum des Summiergetriebes ist zum Innenraum des Getriebes hin mittels der Spaltdichtung 7 und einer Dichtscheibe 6 abgedichtet. Jedoch ist diese so gebildete Dichtung nicht vollständig dicht, so dass ein gewisser kleiner Ölstrom vom Innenraum des Getriebes zum Innenraum des Summiergetriebes ermöglicht ist.

Im Motoradapterflansch 2 ist eine nach oben offene Kapselung 101 angeordnet. Vorzugsweise ist die Kapselung 101 einstückig im Motoradapterflansch 2 ausgeführt. Alternativ ist aber auch ein separates Ausführen der Kapselung 101 ermöglicht, beispielsweise als Kunststoffteil. Der Motoradapterflansch 2 ist in jedem Fall aber aus einem metallischen Werkstoff, insbesondere Gusseisen, Stahl oder Aluminium, ausgeführt.

Die Kapselung 101 folgt der Kontur des von den Verzahnungsteilen 9 und dem Zentralrad 10 eingenommenen Raumbereichs. Zwischen der Kapselung 101 und den Verzahnungsteilen 9 und dem Zentralrad 10 ist nur ein geringer Spalt, so dass der durch die Verzahnungsteile 9 und das Zentralrad 10 bewirkte Schmierstofftransport 107 das Öl aus dem unterhalb des Ölniveaus 106 angeordneten Ölsumpf des Summiergetriebes nach oben fördert. Auf diese Weise sind die Eingriffsbereiche des Summiergetriebes geschmiert.

Am oberen Rand der Kapselung 101 ist eine Überlaufkante 102 ausgeformt, welche überlaufendes Öl einem Zwischenraum zwischen der Kapselung 101 und dem restlichen Motoradapterflansch 2 zuführt, so dass das Öl dann dem Innenraum des Getriebes zugeleitet wird. Hierzu ist ein entsprechender Durchlass zum Innenraum des Getriebes oberhalb des Ölniveaus 105 vorgesehen.

Von den Verzahnungsteilen 9 bei deren Drehbewegung oberhalb der Ablaufkante 102 abgeschleudertes Öl wird an der oberen Innenwandung des Motoradapterflansches 2 einer Fangrippe 103 zugeleitet, direkt von der Fangrippe 103 oder direkt vom Ölableitblech 104 aufgefangen.

Die Fangrippe 103 weist einen lokal tiefsten Punkt auf, also ein lokales Höhenminimum, des Motoradapterflansches 2.

Somit tropft das Öl von der Fangrippe 103 in ein darunter angeordnetes Ölableitblech 104, welches das aufgefangene Öl ebenfalls zum Innenraum des Getriebes hin ableitet, insbesondere oberhalb des Ölniveaus 105 des Getriebes.

Die Spaltdichtung 7 und die Dichtscheibe 6 und die Schmierstoffzufuhr 5 sind derart dimensioniert, dass im Betrieb, also bei drehenden Verzahnungsteilen 9, das Ölniveau 106 im Summiergetriebe niedriger liegt als das Ölniveau 105 des Getriebes.

Das Ölniveau 106 des Summiergetriebes stellt sich im Betrieb insbesondere selbsttätig derart ein, dass das Zentralrad 10 oberhalb dieses Ölniveaus 106 angeordnet ist. Die beiden unteren Verzahnungsteile 9 tauchen somit teilweise in den Ölsumpf des Summiergetriebes ein, die beiden oberen Verzahnungsteile 9 nicht.

Die Verzahnungsteile 9 sind in Umfangsrichtung um das Zentralrad 10 herum unregelmäßig voneinander beabstandet. Vorzugsweise in Umfangsrichtung Abstände von weniger als 90° und Abstände zwischen zwei zueinander in Umfangsrichtung nächstbenachbarten Verzahnungsteilen 9 von mehr als 90° vorhanden. Dabei sind die Abstände derart gewählt, dass niemals zwei Zahneingriffe am Zentralrad gleichzeitig stattfinden. Somit ist ein ruhigerer Lauf des Getriebes bewirkt.

Auf die Kapselung 101 ist auf deren dem Getriebe zugewandten Seite ein Trennblech 4 aufgelegt und zumindest ausreichend dicht verbunden. Somit ist der von der Kapselung 101 und zusammen mit dem Trennblech 4 sowie auf der den Elektromotoren 1 zugewandten Seite der Kapselung 101 zusammen mit dem Motoradapterflansch 2 umschlossene Raumbereich separiert vom Öl des Innenraums des Getriebes, welches an der Trennwand 4, insbesondere an der dem Getriebe zugewandten Seite des Trennblechs 4, ansteht, insbesondere mit dem Ölniveau 105.

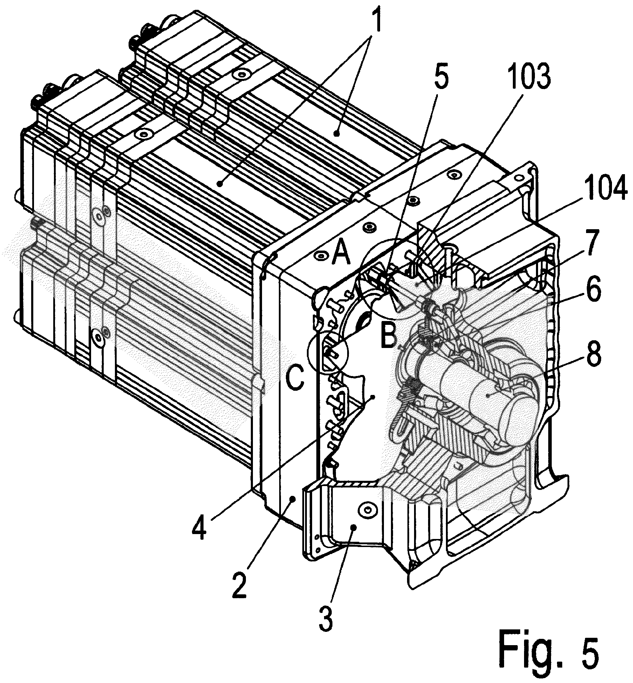

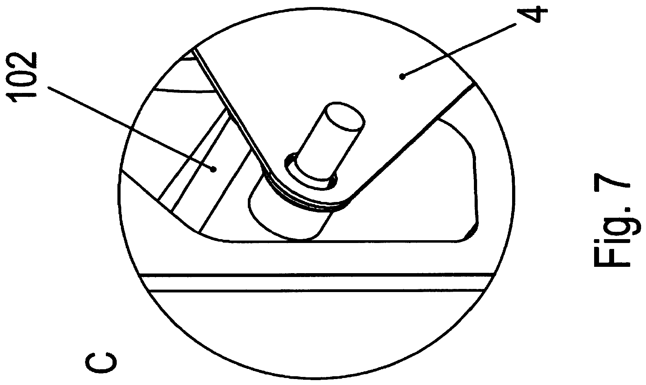

In der Figur 7 ist ein vergrößerter Ausschnitt aus Figur 5 gezeigt. Über die gezeigte Ablaufkante 102, welche durch die Oberkante der Radumhausung gebildet wird, wird Öl aus dem Summiergetriebe heraus gefördert und dem Ölsumpf des Hauptgetriebes zugeführt.

Zusätzlich ist auch eine Druckschmierung für das Summiergetriebe vorsehbar, wenn der Ölfluss vom Getriebe aus durch die Spaltdichtung hindurch nicht ausreichend stark ist. Somit ist durch Steuerung des Ölflusses bei Betrieb sogar ein von der Drehzahl unabhängiger Ölstand im Summiergetriebe erreichbar und Verluste weiter reduzierbar. Ohne Aktive Steuerung stellt sich ein von der Drehzahl abhängiger Ölpegel ein.

### Bezugszeichenliste

1 Elektromotor
2 Motoradapterflansch
3 Gehäuseteil
4 Trennblech
5 Schmierstoffzufuhr
6 Dichtscheibe
7 Spaltdichtung
8 Welle
9 Verzahnungsteil, insbesondere Antriebsritzel
10 Zentralrad, insbesondere Sonnenrad
101 Kapselung, insbesondere Umlaufwand
102 Überlaufkante
103 Fangrippe für Spritzöl
104 Ölableitblech
105 erstes Ölniveau, insbesondere erster Ölpegel
106 zweites Ölniveau, insbesondere zweiter Ölpegel
107 Schmierstofftransport durchdrehende Verzahnungsteile 9
108 Schmierstoffablauf

## Patentansprüche

1. Antrieb, aufweisend von Elektromotoren (1) angetriebenes Summiergetriebe und ein von diesem angetriebenen Getriebe,
wobei das Summiergetriebe ein Zentralrad (10) und Verzahnungsteile (9) aufweist, deren Verzahnung mit der Verzahnung des Zentralrades (10) im Eingriff sind,
**dadurch gekennzeichnet, dass**
im Innenraum des Summiergetriebes ein niedrigeres Ölniveau als im innenraum des Getriebes vorhanden ist, insbesondere bei Betrieb des Antriebs,
das Summiergetriebe eine nach oben offene Kapselung (101) aufweist, welche zu dem von den Verzahnungsteilen (9) und dem Zentralrad (10) bei deren Drehbewegung überdeckten Raumbereich einen gleichmäßigen Abstand aufweist,
wobei von den Verzahnungsteilen (9) und/oder von dem Zentralrad (10) gefördertes, nach oben aus der Kapselung (101) austretendes Öl an einer Überlaufkante der Kapselung (101) oberhalb des im Innenraum des Getriebes vorhandenen Ölniveaus ausläuft in einen Raumbereich, der in den Innenraum des Getriebes mündet.

2. Antrieb nach Anspruch 1,
**dadurch gekennzeichnet, dass**
zwischen dem Innenraum des Summiergetriebes und dem Innenraum des Getriebes eine Spaltdichtung (7) angeordnet ist,
insbesondere welche einen derartig eng dimensionierten Spalt aufweist, dass bei Betrieb des Antriebs im Innenraum des Summiergetriebes ein niedrigeres Ölniveau als im Innenraum des Getriebes vorhanden ist.

3. Antrieb nach mindestens einem der vorangegangenen Ansprüche,
**dadurch gekennzeichnet, dass**
die Gehäuse der Elektromotoren (1) mit einem Motoradapterflansch (2), insbesondere mit einem aus Metall gefertigten Motoradapterflansch (2), lösbar verbunden sind,
- wobei die Kapselung (101) einstückig mit dem Motoradapterflansch (2) ausgeformt ist
- oder wobei die Kapselung (101) als zum Motoradapterflansch (2) separates Teil ausgeführt ist, insbesondere wobei die Kapselung (101) aus einem anderen Material, insbesondere aus Kunststoff, als der Motoradapterflansch (2) gefertigt ist.

4. Antrieb nach mindestens einem der vorangegangenen Ansprüche,
**dadurch gekennzeichnet, dass**
das Öl dem Innenraum des Getriebes zugeführt wird.

5. Antrieb nach mindestens einem der vorangegangenen Ansprüche,
**dadurch gekennzeichnet, dass**
von den Verzahnungsteilen (9) und/oder von dem Zentralrad (10) gefördertes, nach oben aus der Kapselung (101) herausspritzendes Öl von einer Fangrippe direkt aufgefangen oder dieser von einer Innenwandung des Motoradapterflansches (2) zugeleitet wird,
wobei von der Fangrippe abtropfendes Öl, insbesondere mittels eines Ölableitblechs, oberhalb des im Innenraum des Getriebes vorhandenen Ölniveaus in einen Raumbereich geleitet wird, der in den Innenraum des Getriebes mündet,
insbesondere so, dass das Öl dem Innenraum des Getriebes zugeführt wird.

6. Antrieb nach mindestens einem der vorangegangenen Ansprüche,
**dadurch gekennzeichnet, dass**
das jeweilige Verzahnungsteil (9) drehfest mit der jeweiligen Rotorwelle eines jeweiligen Elektromotors (1) verbunden ist.

7. Antrieb nach den Ansprüchen 1, 2 und 3, mindestens einem der vorangegangenen Ansprüche, **dadurch gekennzeichnet, dass**
das Zentralrad (10) mit einer Welle (8) drehfest verbunden ist, welche mittels in einem Gehäuseteil (3) aufgenommenen Lagern drehbar gelagert ist,
wobei das Gehäuseteil (3) auf der von den Elektromotoren (1) abgewandten Seite des Motoradapterflansches (2) mit dem Motoradapterflansch (2) verbunden ist,
wobei ein eintreibendes Verzahnungsteil (9) des Getriebes drehfest mit der Welle (8) verbunden ist,
wobei die Welle (8) zum Gehäuseteil (3) hin mittels der Spaltdichtung (7), insbesondere mittels der Spaltdichtung (7) und einer Dichtscheibe (6) abgedichtet ist.

8. Antrieb nach Anspruch 7, **dadurch gekennzeichnet, dass**
das Gehäuseteil (3) für das Getriebe gehäusebildend ist.

9. Antrieb nach mindestens einem der vorangegangenen Ansprüche,
**dadurch gekennzeichnet, dass**
dem Summiergetriebe zusätzlich Öl über eine Ölleitung zugeführt wird, insbesondere wobei der Förderstrom mittels einer steuerbaren Ölpumpe oder mittels einer anderen Ölflusssteuereinheit abhängig von der Drehzahl des Zentralrads (10) gesteuert wird.

## Claims

1. A drive, having a summation gear unit driven by electric motors (1) and a gear unit driven by said summation gear unit,
wherein
the summation gear unit has a central wheel (10) and toothed parts (9), the gearing of which is engaged with the gearing of the central wheel (10),
**characterised in that**
a lower oil level is present in the interior of the summation gear unit than in the interior of the gear unit, in particular when the drive is in operation,
the summation gear unit has an enclosure (101) which is open upwards which is at a uniform distance from the spatial region covered by the toothed parts (9) and the central wheel (10) upon the rotary movement thereof,
wherein
oil conveyed by the toothed parts (9) and/or by the central wheel (10) and emerging upwards out of the enclosure (101) runs out at an overflow edge of the enclosure (101) above the oil level present in the interior of the gear unit into a spatial region which opens into the interior of the gear unit.

2. A drive according to Claim 1,
**characterised in that**
a gap seal (7) is arranged between the interior of the summation gear unit and the interior of the gear unit,
in particular which has a gap of such narrow dimensions that upon operating the drive a lower oil level than in the interior of the gear unit is present in the interior of the summation gear unit.

3. A drive according to at least one of the preceding claims,
**characterised in that**
the housings of the electric motors (1) are detachably connected to a motor adapter flange (2), in particular to a motor adapter flange (2) manufactured from metal,
- wherein the enclosure (101) is formed in one piece with the motor adapter flange (2)
- or wherein the enclosure (101) is embodied as a part separate from the motor adapter flange (2), in particular wherein the enclosure (101) is manufactured from a different material, in particular from plastics material, from the motor adapter flange (2).

4. A drive according to at least one of the preceding claims,
**characterised in that**
the oil is supplied to the interior of the gear unit.

5. A drive according to at least one of the preceding claims,
**characterised in that**
oil conveyed by the toothed parts (9) and/or by the central wheel (10) which sprays out upwards out of the enclosure (101) is directly captured by a collecting rib or is conducted thereto by an inner wall of the motor adapter flange (2),
wherein oil dripping off the collecting rib, in particular by means of an oil discharge plate, is conducted above the oil level present in the interior of the gear unit into a spatial region which opens into the interior of the gear unit,
in particular such that the oil is supplied to the interior of the gear unit.

6. A drive according to at least one of the preceding claims,
**characterised in that**
the respective toothed part (9) is connected in rotation-resistant manner to the respective rotor shaft of a respective electric motor (1).

7. A drive according to Claims 1, 2 and 3,
at least one of the preceding claims,
**characterised in that**
the central wheel (10) is connected in rotation-resistant manner to a shaft (8) which is rotatably mounted by means of bearings which are received in a housing part (3),
the housing part (3) being connected to the motor adapter flange (2) on that side of the motor adapter flange (2) which is remote from the electric motors (1),
with an input toothed part (9) of the gear unit being connected in rotation-resistant manner to the shaft (8),
wherein the shaft (8) is sealed off towards the housing part (3) by means of the gap seal (7), in particular by means of the gap seal (7) and a sealing disc (6).

8. A drive according to Claim 7,
**characterised in that**
the housing part (3) forms a housing for the gear unit.

9. A drive according to at least one of the preceding claims,
**characterised in that**
additionally oil is supplied to the summation gear unit by way of an oil line, in particular with the stream being conveyed being controlled by means of a controllable oil pump or by means of another oil flow control unit dependent on the speed of rotation of the central wheel (10).

## Revendications

1. Entraînement, présentant un engrenage sommateur entraîné par des moteurs électriques (1) et un réducteur entraîné par ce dernier,
dans lequel l'engrenage sommateur présente une roue centrale (10) et des parties dentées (9) dont la denture est en prise avec la denture de la roue centrale (10), **caractérisé en ce que**
un niveau d'huile plus faible est présent dans l'espace intérieur de l'engrenage sommateur que dans l'espace intérieur du réducteur, en particulier lors du fonctionnement de l'entraînement,
l'engrenage sommateur présente un encapsulage (101) ouvert vers le haut qui présente une distance uniforme par rapport à la zone spatiale couverte par les parties dentées (9) et la roue centrale (10) lors de leur mouvement de rotation,
dans lequel l'huile transportée par les parties dentées (9) et/ou par la roue centrale (10) et sortant de l'encapsulage (101) vers le haut s'écoule, au niveau d'un bord de débordement de l'encapsulage (101) au-dessus du niveau d'huile présent dans l'espace intérieur du réducteur, dans une zone d'espace qui débouche dans l'espace intérieur du réducteur.

2. Entraînement selon la revendication 1,
**caractérisé en ce que**
un joint à fente (7) est disposé entre l'espace intérieur de l'engrenage sommateur et l'espace intérieur du réducteur,
lequel présente en particulier une fente suffisamment étroite pour que, lors du fonctionnement de l'entraînement, un niveau d'huile plus faible soit présent dans l'espace intérieur de l'engrenage sommateur que dans l'espace intérieur du réducteur.

3. Entraînement selon au moins l'une des revendications précédentes,
**caractérisé en ce que**
les carters des moteurs électriques (1) sont reliés de manière amovible à une bride d'adaptation de moteur (2), en particulier à une bride d'adaptation de moteur (2) en métal,
- dans lequel l'encapsulage (101) est formé d'une seule pièce avec la bride d'adaptation de moteur (2)
- ou dans lequel l'encapsulage (101) est réalisé sous la forme d'une partie séparée de la bride d'adaptation de moteur (2), en particulier dans lequel l'encapsulage (101) est constitué d'un matériau différent que celui de la bride d'adaptation de moteur (2), en particulier d'une matière plastique.

4. Entraînement selon au moins l'une des revendications précédentes,
**caractérisé en ce que**
l'huile est amenée dans l'espace intérieur du réducteur.

5. Entraînement selon au moins l'une des revendications précédentes,
**caractérisé en ce que**
l'huile qui est transportée par les parties dentées (9) et/ou par la roue centrale (10) et qui jaillit de l'encapsulage (101) vers le haut est recueillie directement par une nervure de retenue ou est amenée à celle-ci par une paroi intérieure de la bride d'adaptation de moteur (2),
dans lequel l'huile qui s'égoutte de la nervure de retenue, en particulier au moyen d'un déflecteur d'huile, au-dessus du niveau d'huile présent dans l'espace intérieur du réducteur, est conduite dans une zone spatiale qui débouche dans l'espace intérieur du réducteur,
en particulier de telle sorte que l'huile soit amenée dans l'espace intérieur du réducteur.

6. Entraînement selon au moins l'une des revendications précédentes,
**caractérisé en ce que**
la partie dentée respective (9) est reliée de manière solidaire en rotation à l'arbre de rotor respectif d'un moteur électrique respectif (1).

7. Entraînement selon les revendications 1, 2 et 3,
au moins l'une des revendications précédentes,
**caractérisé en ce que**
la roue centrale (10) est reliée de manière solidaire en rotation à un arbre (8) qui est monté rotatif au moyen de paliers reçus dans une partie carter (3),
dans lequel la partie carter (3) est reliée à la bride d'adaptation de moteur (2) du côté de la bride d'adaptation de moteur (2) opposé aux moteurs électriques (1),
dans lequel une partie dentée menante (9) du réducteur est reliée de manière solidaire en rotation à l'arbre (8),
dans lequel l'arbre (8) est rendu étanche par rapport à la partie carter (3) au moyen du joint à fente (7), en particulier au moyen du joint à fente (7) et d'une rondelle d'étanchéité (6).

8. Entraînement selon la revendication 7,
**caractérisé en ce que**
la partie carter (3) forme un carter pour le réducteur.

9. Entraînement selon au moins l'une des revendications précédentes,
**caractérisé en ce que**
de l'huile est en outre amenée à l'engrenage sommateur par une conduite d'huile, le débit de transport étant en particulier commandé au moyen d'une pompe à huile commandable ou au moyen d'une autre unité de commande du débit d'huile en fonction de la vitesse de rotation de la roue centrale (10).
